# EUROPÄISCHE PATENTSCHRIFT

(11) **EP 1 568 272 B1**
(45) Veröffentlichungstag und Bekanntmachung des Hinweises auf die Patenterteilung: **29.11.2006**
(21) Anmeldenummer: 05003549.2
(22) Anmeldetag: 18.02.2005
(51) Int. Cl.: A01K 7/04

(54) **Tränktrog mit Wasserauslauföffnung**
Drinking trough with a water outlet opening
Abreuvoir avec un orifice de sortie pour l'eau

(30) Priorität: 28.02.2004 DE 202004003119 U
(43) Veröffentlichungstag der Anmeldung: 31.08.2005
(73) Patentinhaber: Suevia Haiges Gmbh, 74366 Kirchheim/Neckar (DE)
(72) Erfinder: Haiges, Frank, 74366 Kirchheim/Neckar (DE)
(74) Vertreter: Wolff, Michael

(56) Entgegenhaltungen:
- DE-B- 10 323 140
- DE-U1- 29 917 993
- US-A- 3 841 268
- US-A- 3 921 587
- US-A1- 2003 140 864

## Beschreibung

Die Erfindung betrifft einen Tränktrog mit zwei schrägstehenden Längswänden, zwei Stirnwänden und einem an alle Wände anschließenden Boden, wie aus der DE 299.17.993 U1 bekannt.

Bei bekannten Trögen vorgenannter Art hat der Boden mit waagrechter Oberfläche keine Auslauföffnung zum Entleeren der Wanne mehr. Statt dessen lässt sich die Wanne um eine waagrechte Achse über 90° kippen. Bei diesem Schwenkvorgang, den eine entsprechende Troglagerung mittels Konsolen an der Stallwand oder auf dem Stallboden ermöglicht, fließt das allmählich schmutzig gewordene, stehende Wasser im Trog über dessen tiefer gelegte Längswand in eine Rinne oder durch ein Gitter ab; ggf. aber auf den Stallboden, wo Eisbildung im Winter eine Rutschgefahr für die aufgestallten Tiere darstellt. - Die durch Kippen erreichbare Selbstreinigungswirkung auf den Trog ist verbesserungsbedürftig. Außerdem ist es aufwendig, die Wanne drehbar und arretierbar zu lagern.

Der Erfindung liegt daher die Aufgabe zugrunde, einen einfacheren, unbeweglichen Tränktrog zu schaffen, der bequemer und besser gereinigt werden kann.

Diese Aufgabe ist durch einen Tränktrog gemäß Hauptanspruch (Nr. 1) gelöst. Durch das, vorzugsweise stetige, Gefälle der Bodenoberfläche und die Wasserauslauföffnung des Trogbodens sowie die Trogverengung dorthin entsteht bei plötzlicher völliger Freigabe dieser Öffnung eine starke Wasserströmung längs der Fallrichtung der Bodenoberfläche vom höher liegenden Bodenrand zum tiefer liegenden Bodenrand, wo das Wasser dank einer weit zu dimensionierenden Auslauföffnung rasch abfließt. Diese beschleunigte Strömung reinigt die Bodenoberfläche ohne Nacharbeit.

Es ist zwar aus der DE 103.23.140 B3 eine als Tränktrog verwendbare Badewanne der eingangs genannten Art und gemäß Oberbegriff des Hauptanspruches(Nr.1) bekannt gewesen, deren gefalteter Boden in seiner Längsmitte einen großen stumpfen Innenwinkel bildet, der den Wasserablauf verbessern soll wie die "leichte"(1%) Neigung des Wannenbodens zur Abflussöffnung hin. Dabei sind aber die Längswände der Wanne größtenteils viereckig, während der unebene Wannenboden überwiegend rechteckig ist. Dadurch ergibt sich die typische hohle Quaderform älterer Badewannen.

Bevorzugte, vorteilhafte Ausführungsformen des erfindungsgemäßen Tränktroges sind in den Unteransprüchen (Nr. 2 bis 10) charakterisiert:

Falls entgegen Anspruch 2 der hinsichtlich des Flächeninhalts überwiegende Mittelteil der Bodenoberfläche eine schiefe Ebene bildet, ist für eine gleichmäßige Überströmung des Trogbodens gesorgt, da waagrechte Querstreifen der Bodenoberfläche ebenso fehlen wie Zwischensteigungen in Strömungsrichtung.

Regelmäßig wird der Tränktrog mit einem Wassereinlauf-Sperrventil mit Schwimmer versehen sein. Ein solches Ventil arbeitet selbsttätig und sorgt für ein Nachfüllen des Troges, solange aus ihm Wasser entnommen wird. - Bei einer Anordnung dieses Einlaufventils und seines Schwimmers gemäß Anspruch 3 bespült das zulaufende Wasser bei entleertem Trog dessen nasse Bodenoberfläche, sodass letzte Schmutzreste entfernt und ausgespült werden.

Bei einer Ausgestaltung des Auslaufventils gemäß Anspruch 5 kann entweder die Ringscheibe aus dichtendem Hartgummi bestehen oder die Berandung der Auslauföffnung mit einem O-Ring belegt sein, mit der die Ringscheibe am Betätigungsstab zusammenwirkt (Anspruch 6).

Bei einer Ausgestaltung des Auslaufventils gemäß Anspruch 6 kann der Stopfen entweder massiv oder gemäß Anspruch 7 durchbohrt sein und im letztgenannten Falle auf dem unteren Ende des Betätigungsrohres sitzen.

Falls der Betätigungsstab gemäß Anspruch 7 als Rohr mit seitlicher Überlauföffnung ausgebildet ist, wird bei Wasserentnahmen durch die zu tränkenden Tiere nachfließendes Wasser zum Teil durch diese Öffnung, in die es hineinschwappt, abgeführt. Infolgedessen bleibt die Wasseroberfläche sauber und frostfrei. - Dies gilt insbesondere dann, wenn über dem Schwimmerventil ein Thermostatventil angeordnet ist (Anspruch 7), das bei einer Lufttemperatur unter dem Gefrierpunkt des Trinkwassers im Trog für den Wasserauslauf über das Schwimmerventilgehäuse geöffnet ist und andauernd Wasser ersetzt, das durch die Überlauföffnung verloren geht, wobei eine Oberflächenströmung entsteht, die ein Einfrieren des Wassers im Trog verhindern kann.

Bekannt war auch ein Tränktrog gemäß US-A-3.841.268, dessen konkave Oberfläche des zylindrischen Trogbodens zwischen der einen Trogstirnwand beim Wassereinlaufventil und ler anderen Trogstirnwand bei der Wasserauslauföffnung waagrecht angeordnet ist, welche mittels eines einschraubbaren vertikalen Überlaufrohres zu schließen ist.

Im Folgenden ist die Erfindung anhand einer durch die beigefügte Zeichnung beispielhaft dargestellten Ausführungsform des erfindungsgemäßen Tränktroges im Einzelnen erläutert. Es zeigt teilweise schematisch:
- Fig. 1: einen vertikalen Längsschnitt durch die Ausführungsform an Standbügeln, die auf einem Stallboden stehen
- Fig. 2: eine vertikale Draufsicht auf die Ausführungsform an solchen Standbügeln

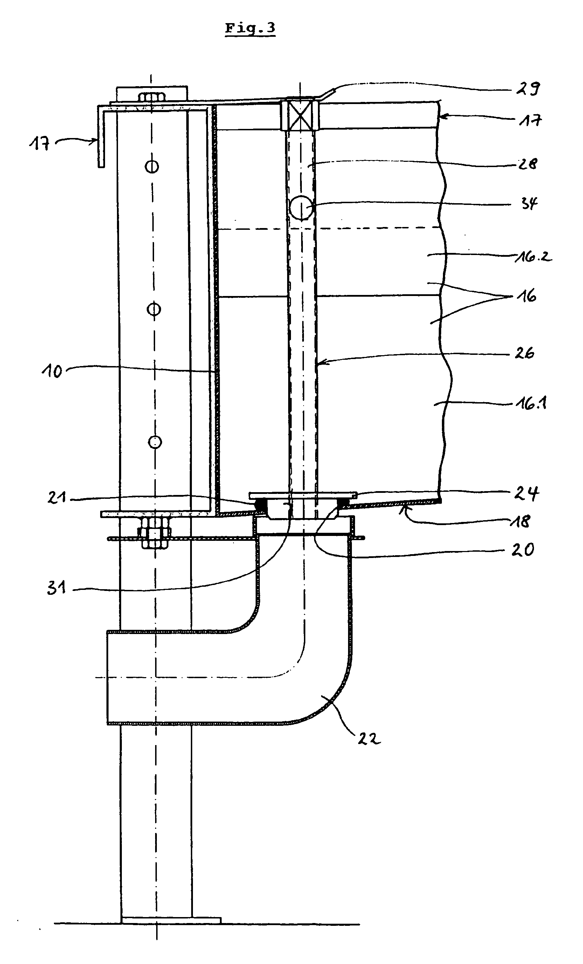

- Fig. 3: einen rechts abgebrochenen, vergrößerten Längsschnitt nach der Linie III-III in Fig.2 durch die Ausführungsform

Der erfindungsgemäße Tränktrog ist im Ausführungsbeispiel an zwei vertikal auf den Stallboden gestellte runde Pfosten geklemmt mittels Schrauben, die eine Höhenverstellung des Troges ermöglichen. In der Nähe des linken Pfostens ist in den Boden ein vertikales Abflussrohr eingelassen (nicht gezeigt).

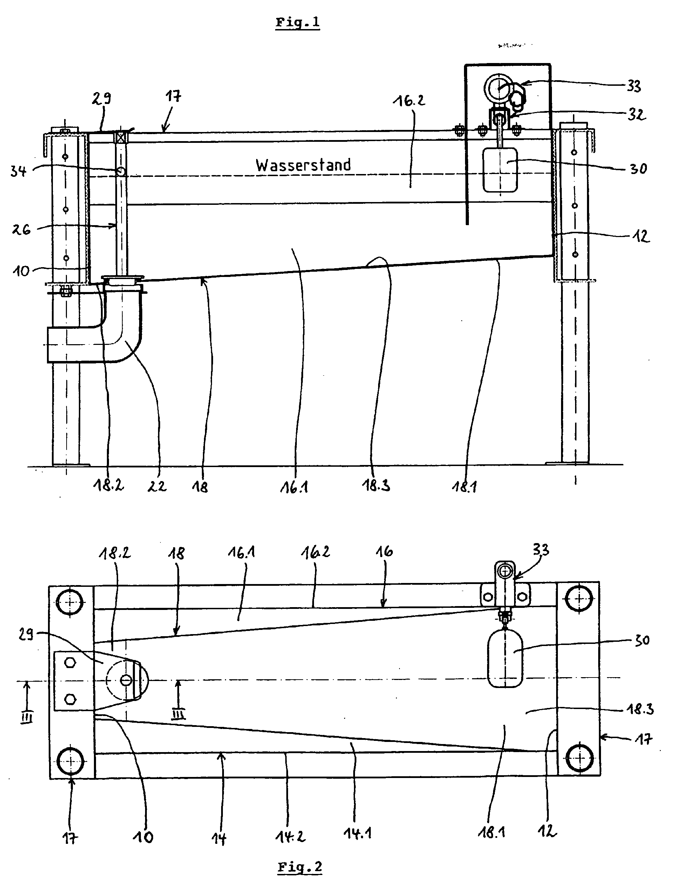

Der Trog ist aus Edelstahlblech gefertigt und besteht hauptsächlich aus zwei parallelen vertikalen ebenen Stirnwänden 10 und 12, zwei diese verbindenden gewinkelten Längswänden 14 und 16 aus je einem ebenen schrägen Unterteil 14.1 bzw. 16.1 und einem ebenen vertikalen Oberteil 14.2 bzw. 16.2.. Diese Wände sind oben mittels eines rechteckigen Rahmens 17 eingefasst. - Der Trog hat einen an alle vier Wände anschließenden, ebenen Boden 18 in geneigter Trapezform, der an der (in Fig. 1 und 2) rechten Stirnwand 12 innen stumpfwinklig anschließt, während er an der linken Stirnwand 10 mit seinem tiefer liegenden Rand 18.2 spitzwinklig anschließt, sodass der schräge Boden 18 und damit seine Oberfläche 18.3 zwischen der rechten Stirnwand 12 und der linken Stirnwand 10 eine schiefe Ebene mit einem Neigungswinkel von 3° bis 5° gegen die Waagrechte darstellen.

Der linke Bodenrand 18.2 weist eine mittige kreisförmige Auslauföffnung 20 eines von Hand zu betätigenden Sperrventils 20/21/24/31 - im Folgenden "Auslaufventil" genannt - zum Entleeren des Troges auf, deren Berandung auf ihrer Unterseite einem rahmenfesten Krümmer 22 gegenüberliegt, der in das stallseitige Abflussrohr entleert. Diese Öffnung 20 wird auf ihrer Oberseite mit einem an einer waagrechten Ringscheibe 24 des Auslaufventils größeren Durchmessers anliegenden O-Ring 21 des Auslaufventils belegt, welche auf dem unteren Ende eines vertikalen Betätigungsstabes 26 sitzt, dessen oberes Ende, das bei geschlossenem Auslaufventil über den maximalen Wasserstand im Trog hinausragt, als Griff 28 vorgesehen ist, den eine drehbare Klemmlasche 29 am Rahmen 17 niederhält. - Die Unterseite der Ringscheibe 24 ist mit einem flachen Stopfen 31 des Auslaufventils versehen, der in die Auslauföffnung 20 passt und den O-Ring 21 trägt sowie zur zentralen Aufnahme des unteren Endes des als Rohr ausgebildeten Stabes 26 durchbohrt ist. Diese Trogteile 21, 24 und 31 bilden gemeinsam einen entfernbaren Ventilkörper 21/24/31 des Auslaufventils, welches mit der Auslauföffnung 20 zusammenwirkt.

Über dem (in Fig. 1) rechten Bodenrand 18.1 ist der Schwimmer 30 eines üblichen Wasser-Einlaufventils 32 angeordnet, das auf dem Rahmen 17 über der (in Fig. 2) hinteren Längswand 16 in der Nähe der rechten Stirnwand 12 gelagert ist und den höhenverstellbaren Schwimmer 30 frei trägt.

Über dem Schwimmerventil 32 ist ein Thermostatventil 33 angeordnet, das bei Erreichen der Frostgrenze öffnet bzw. schließt und wärmeres Wasser über das Schwimmerventil zu dessen Frostfreihaltung in den Trog fließen lässt, wo es oberflächlich zum oberen Ende des rohrförmigen Stabes fließt, der dort eine Überlauföffnung 34 aufweist.

Die Wirkungsweise der beschriebenen Ausführungsform ist folgende, wenn man von dem Zustand gemäß Fig. 1 ausgeht, in dem der durch eine gestrichelte Linie bezeichnete Wasserstand nahezu sein Maximum erreicht hat und das Einlaufventil 32 sowie das Auslaufventil(Sperrventil 20/21/24/31) geschlossen sind:
Entnimmt ein sich selbst tränkendes Tier Wasser, so sinkt der Wasserspiegel und mit ihm der Schwimmer 30, bis dieser das Einlaufventil 32 öffnet, worauf Wasser nachfließt und den erniedrigten Wasserstand auf das alte Niveau erhöht. Am Ende schließt der Schwimmer 30 das Einlaufventil 32 wieder.
Wird nun eine Entleerung des Troges gewünscht, zieht die Bedienungsperson den Stab zur Öffnung des Auslaufventils nach Wegschwenken der Lasche 29 am Griff 28 nach oben, sodass der Ventilkörper 21/24/31 die Auslauföffnung 20 freigibt. Das alsbald öffnende Einlaufventil 32 kann den eintretenden Wasserverlust nicht sofort ausgleichen, sodass es auch dann noch und gerade dann erwünschtermassen Wasser einlaufen lässt, wenn der Trogboden 18 ohne Wasserstand ist. Jetzt strömt Frischwasser entlang der Fall-Linien des geneigten Bodens 18 diesen hinab, wobei seine Oberfläche gespült wird. Soll diese nicht von Hand durchgeführte Reinigung des Trogbodens beendet werden, schließt die Bedienungsperson das Auslaufventil wieder. Infolgedessen steigt der Wasserstand fast bis zum Maximalpegel, wobei das Einlaufventil 32 schließlich geschlossen wird.

## Patentansprüche

1. Tränktrog mit zwei schrägstehenden Längswänden(14,16), zwei Stirnwänden(10,12) und einem an alle Wände anschließenden Boden(18), wobei die Oberfläche(18.3) des Bodens(18) ein Gefälle ohne Zwischensteigung zwischen der einen Stirnwand(12) und der anderen Stirnwand(10) aufweist und in der Nähe ihrer tiefsten Stelle eine Wasserauslauföffnung(20) hat, die gegebenenfalls mittels eines von Hand zu betätigenden Sperrventils(20/21/24/31) freizugeben und zu schließen ist, **dadurch gekennzeichnet, dass** die schrägen Unterteile(14.1 und 16.1) der beiden Längswände(14 und 16) größtenteils dreieckig sind und die Oberfläche(18.3) des Bodens(18) zwischen den beiden Stirnwänden(10 und 12) eine schiefe Ebene bildet sowie zumindest überwiegend trapezförmig ist.

2. Tränktrog nach Anspruch 1, **dadurch gekennzeichnet, dass** die Oberfläche des höher liegenden Bodenrandes(18.1) in der schiefen Ebene liegt und die schräge Oberfläche des tiefer liegenden Bodenrandes(18.2) die Auslauföffnung(20) aufweist.

3. Tränktrog nach Anspruch 1 oder 2, dass über dem höher liegenden Bodenrand(18.1) der Schwimmer(30) eines Wassereinlaufsperrventils(32) angeordnet ist, das an der einen Stirnwand(12) oder an einer der beiden Längswände(16.3) befestigt ist und den Schwimmer(30) frei trägt.

4. Tränktrog nach einem der Ansprüche 1 bis 3, **dadurch gekennzeichnet, dass** die Auslauföffnung(20) mittels eines dichtenden Ventilkörpers(21/24/31) geschlossen ist, der am unteren Ende eines im Wesentlichen vertikalen Betätigungsstabes(26) befestigt ist, dessen oberes Ende über den höchsten Wasserstand hinausragt und als Griff(28) vorgesehen ist.

5. Tränktrog nach Anspruch 4, **dadurch gekennzeichnet, dass** der Betätigungsstab(26) eine Ringscheibe(24) des Ventilkörpers(21/24/31) trägt, die mit der Berandung der Auslauföffnung (20) zusammenwirkt.

6. Tränktrog nach Anspruch 5, **dadurch gekennzeichnet, dass** der Betätigungsstab(26) an seinem unteren Ende mit einem Stopfen(31) des Ventilkörpers(21/24/31) versehen ist, der an der Unterseite der Ringscheibe(24) angeordnet ist sowie einen zwischen dieser und der Berandung der Auslauföffnung(20) eingeklemmten O-Ring(21) des Ventilkörpers(21/24/31) trägt.

7. Tränktrog nach einem der Ansprüche 4 bis 6, **dadurch gekennzeichnet, dass** der Betätigungsstab(26) als Rohr ausgebildet ist und in dessen Wandung eine seitliche Überlauföffnung(34) aufweist, wobei ein Stopfen(31) durchbohrt ist; und dass beim Schwimmerventil(32) ein Thermostatventil angeordnet ist, das Trinkwasser zum Entfrosten des Schwimmerventils abgibt.

8. Tränktrog nach einem der Ansprüche 1 bis 7, **dadurch gekennzeichnet, dass** auf der Unterseite des tiefer liegenden Bodenrandes(18.2) an die Berandung der Auslauföffnung(20) ein Auslaufstutzen(22) angesetzt ist, der ggf. in ein stallseitiges Abflussrohr eindringt.

9. Tränktrog nach einem der Ansprüche 1 bis 8, **dadurch gekennzeichnet, dass** dessen Wände(10, 12, 14, 16) und sein Boden(18) aus Edelstahl-Blech oder Kunststoff-Platten bestehen, wobei die oberen Ränder(14.3 und 16.3) der Längswände(14 und 16) waagrecht umgelegt sind.

10. Tränktrog nach einem der Ansprüche 4 bis 6, **dadurch gekennzeichnet, dass** den Griff(28) des Betätigungsstabes(26) eine Klemmlasche(29) niederhält, die an einem die Wände(10,12,14,16) einfassenden rechteckigen Rahmen (17) angeordnet ist.

## Claims

1. Drinking trough with two inclined longitudinal walls (14, 16), two end walls (10, 12) and a base (18) connecting with all walls, wherein the upper surface (18.3) of the base (18) has a drop without intermediate rise between one end wall (12) and the other end wall (10) and has in the vicinity of its deepest point a water outlet opening (20) which in a given case can be freed and closed by means of a manually actuable blocking valve (20/21/24/31), **characterised in that** the inclined lower parts (14.1 and 16.1) of the two longitudinal walls (14 and 16) are for the most part triangular and the upper surface (18.3) of the base (18) between the two end walls (10 and 12) forms an inclined plane and is at least predominantly trapezium-shaped.

2. Drinking trough according to claim 1, **characterised in that** the surface of the higher base edge (18.1) lies in the inclined plane and the inclined surface of the lower base edge (18.2) has the outlet opening (20).

3. Drinking trough according to claim 1 or 2, **characterised in that** arranged above the higher base edge (18.1) is the float (30) of a water inlet blocking valve (32), which is fastened to the one end wall (12) or to one of the two longitudinal walls (16.3) and freely carries the float (30).

4. Drinking trough according to one of claims 1 to 3, **characterised in that** the outlet opening (20) is closed by means of a sealing valve body (21/24/31), which is fastened to the lower end of a substantially vertical actuating rod (26), the upper end of which projects above the highest water level and is provided as a grip (28).

5. Drinking trough according to claim 4, **characterised in that** the actuating rod (26) carries an annular disc (24) of the valve body (21/24/31), which co-operates with the rim of the outlet opening (20).

6. Drinking trough according to claim 5, **characterised in that** the actuating rod (26) is provided at its lower end with a plug (31) of the valve body (21/24/31), which is arranged at the underside of the annular disc (24) and carries an O-ring (21), which is clamped between this and the rim of the outlet opening (20), of the valve body (21/24/31).

7. Drinking trough according to one of claims 4 to 6, **characterised in that** the actuating rod (26) is constructed as a tube and has a lateral overflow opening (34) in the wall thereof, wherein a plug (31) is drilled through, and that a thermostatic valve which delivers drinking water for defrosting the float valve is arranged at the float valve (32).

8. Drinking trough according to one of claims 1 to 7, **characterised in that** an outlet stub pipe (22) which in a given case penetrates an overflow pipe at the stall side, is placed on the underside of the lower base edge (18.2) at the rim of the outlet opening (20).

9. Drinking trough according to one of claims 1 to 8, **characterised in that** the walls (10, 12, 14, 16) thereof and its base (18) consist of stainless steel plate or plastics material plates, wherein the upper edges (14.3 and 16.3) of the longitudinal walls (14 and 16) are folded over horizontally.

10. Drinking trough according to one of claims 4 to 6, **characterised in that** the grip (28) of the actuating rod (26) holds down a clamping strap (29) which is arranged at a rectangular frame (17) bordering the walls (10, 12, 14, 16).

## Revendications

1. Abreuvoir avec deux parois longitudinales inclinées (14, 16), deux parois frontales (10, 12) et un fond (18) qui fait suite à toutes les parois, la surface (18.3) du fond (18) présentant une inclinaison, sans pente intermédiaire, entre une paroi frontale (12) et l'autre paroi frontale (10) et étant pourvu près de son point le plus bas d'une ouverture de sortie d'eau (20) qui peut éventuellement être dégagée et fermée à l'aide d'une vanne d'arrêt (20/21/24/31) à commande manuelle,
**caractérisé en ce que** les parties inférieures inclinées (14.1 et 16.1) des deux parois longitudinales (14 et 16) sont en grande partie triangulaires et la surface (18.3) du fond (18) forme entre les deux parois frontales (10 et 12) un plan incliné et est au moins en grande partie trapézoïdale.

2. Abreuvoir selon la revendication 1, **caractérisé en ce que** la surface du bord haut (18.1) du fond est située dans le plan incliné et la surface inclinée du bord bas (18.2) présente l'ouverture de sortie (20).

3. Abreuvoir selon la revendication 1 ou 2, **caractérisé en ce qu'**il est prévu, au-dessus du bord haut (18.1), le flotteur (30) d'une vanne d'arrêt d'entrée d'eau (32) qui est fixée à une paroi frontale (12) ou à l'une des deux parois longitudinales (16.3) et qui porte ledit flotteur (30).

4. Abreuvoir selon l'une des revendications 1 à 3, **caractérisé en ce que** l'ouverture de sortie (20) est fermée à l'aide d'un corps de vanne d'étanchéité (21/24/31) fixé à l'extrémité inférieure d'une tige d'actionnement (26) qui est sensiblement verticale et dont l'extrémité supérieure dépasse du niveau d'eau maximal et est prévue sous la forme d'une poignée (28).

5. Abreuvoir selon la revendication 4, **caractérisé en ce que** la tige d'actionnement (26) porte une rondelle (24) du corps de vanne (21/24/31) qui coopère avec le bord de l'ouverture de sortie (20).

6. Abreuvoir selon la revendication 5, **caractérisé en ce que** la tige d'actionnement (26) est pourvue à son extrémité inférieure d'un bouchon (31) du corps de vanne (21/24/31) qui est disposé sur le côté inférieur de la rondelle (24) et qui porte un joint torique (21) dudit corps qui est serré entre la rondelle (24) et le bord de l'ouverture de sortie (20).

7. Abreuvoir selon l'une des revendications 4 à 6, **caractérisé en ce que** la tige d'actionnement (26) est conçue comme un tube et présente dans sa paroi une ouverture de trop-plein latérale (34), un bouchon (31) étant percé, et **en ce qu'**il est prévu sur la vanne à flotteur (32) une vanne à thermostat qui libère de l'eau potable pour dégeler la vanne à flotteur.

8. Abreuvoir selon l'une des revendications 1 à 7, **caractérisé en ce qu'**il est prévu, rattachée sur le bord de l'ouverture de sortie (20), sur le côté inférieur du bord bas (18.2) du fond, une tubulure de sortie (22) qui entre éventuellement dans un tuyau d'écoulement prévu côté étable.

9. Abreuvoir selon l'une des revendications 1 à 8, **caractérisé en ce que** ses parois (10, 12, 14, 16) et son fond (18) se composent de tôle d'acier spécial ou de plaques en matière plastique, les bords supérieurs (14.3 et 16.3) des parois longitudinales (14 et 16) étant repliés à l'horizontale.

10. Abreuvoir selon l'une des revendications 4 à 6, **caractérisé en ce que** la poignée (28) de la tige d'actionnement (26) est maintenue abaissée par une patte de blocage (29) disposée sur un cadre rectangulaire (17) qui entoure les parois (10, 12, 14, 16).
